# EUROPEAN PATENT SPECIFICATION

(11) **EP 0 882 220 B1**
(45) Date of publication and mention of the grant of the patent: **03.03.2004**
(21) Application number: 96942268.2
(22) Date of filing: 18.12.1996
(51) Int. Cl.: G01K 17/08

(54) **A METHOD AND A HEAT CONSUMPTION METER FOR A RADIATOR**
KALORIMETERVERFAHREN UND -VORRICHTUNG FÜR RADIATOR
CALORIMETRE POUR RADIATEUR ET PROCEDE CORRESPONDANT

(30) Priority: 18.12.1995 DK 143695
(43) Date of publication of application: 09.12.1998
(73) Proprietor: Brunata Holding A/S, 2960 Rungsted Kyst (DK)
(72) Inventor: FISCHER-HANSEN, Jens, Peter, DK-2960 Rungsted Kyst (DK)
(74) Representative: Boesen, Johnny Peder
(86) International application number: PCT/DK1996/000545
(87) International publication number: WO 1997/022863

(56) References cited:
- EP-A- 0 099 060
- FR-A- 2 644 584
- FR-A- 2 672 991

## Description

The present invention relates to a method and a heat consumption meter for recording the amount of heat consumed from radiators, comprising a housing with a calculator unit and with temperature sensors connected thereto for radiator and room temperatures, wherein the calculator unit is intended for calculating the heat emission from the radiator on the basis of the measured temperatures.

Heat consumption meters for radiators are used in particular for central and district heating installations for the distribution of the total heat costs in proportion with the heat consumption. The heat emission of a radiator is proportionate with the effective heating surface multiplied by a function of the difference between the temperatures of the radiator and the ambient air. Thus, in reality the meter serves to integrate this function over time, and numbers of different types of heat consumption meters are known of which some do not take into account the temperature of the ambient air, but base the measurement entirely on the temperature of the radiator, such as evaporation measuring devices, while other well-known types measure both said temperatures by means of thermoelements, and wherein the thermocurrent produced is measured by means of an Ah-meter which may consist of e.g. an irreversible electrolyte meter that discharges mercury in an amount that corresponds to the heat emission of the radiator.

Although radiators with dual-sensor meters for measuring the radiator as well as the room temperature provide a comparatively accurate measurement of the heat consumption, the known designs of such meters, however, are associated with a number of drawbacks, such as various possibilities for cheating the heat consumption meter, e.g. by covering, heating or cooling of the temperature sensors, and limitations as to the accuracy of the marginal ranges for the occurring temperatures or in atypical operation conditions. Thus, in order to avoid recording of an "idle" consumption without the radiator emitting heat, the meter may be provided with such functional limitation that the meter does not record any consumption until the radiator is above a certain minimum temperature. If, however, it is set too high it may mean that heat emission from the radiator which should have been measured is not measured. It may also occur that the meter measures a heat emission from the radiator which is actually taking place but cannot be measured since the heat emitted is not to be part of the heating costs to be distributed since the radiator has been heated in some other way than through the supply pipes, in particular in very hot summers and/or by direct incident sunlight on the radiator or by simultaneous use of another heat source.

It is the object of the present invention to provide a method and a heat consumption meter for a radiator for recording the heat consumed in a radiator which provides the option of a more accurate measurement relative to the actual heat consumption compared to the existing meters.

This is obtained by the method according to claim 1 and by use of the meter according to claim 8. Hereby it is namely obtained that an amount of heat which is emitted from the radiator to the room when the radiator is turned off is not recorded as heat consumption if a high room temperature has arisen within e.g. a 24-hour cycle, in particular due to heating by sun or other heat source, compensation being made by the calculated negative heat consumption during the hottest part of said 24-hour cycle.

Hereby it is prevented that the heat consumption meter records a non-actual heat consumption during the summer when the heating installation is otherwise shut down.

The formula for calculation of the positive or negative heat consumption (mode 3) can be selected among a number of different calculation formulas and may be the one preferred in another mode used with the invention.

Preferred embodiments of the invention utilises said mode (mode 3) only when the numerical difference between the calculated room temperature and the calculated radiator temperature is below a pre-determined limit value. Hereby it is ensured that the meter cannot be manipulated to calculate a very large negative heat consumption.

According to a further preferred embodiment of the invention, the meter has an alternative heat recording mode (mode 1, 2) in which no recording of negative consumption is carried out when said difference in temperature is above the predetermined limit value, and wherein calculation of the heat consumption is carried out by measurement of a predetermined substitute room temperature instead of the calculated room temperature.

The invention will now be described in further detail with reference to the drawings wherein
Figure 1 illustrates an embodiment of a heat consumption meter according to the invention, seen from the front,
- Figure 2 is a vertical sectional view along the line II-II in Figure 1 of the same,
Figure 3 is a perspective view of a print card in the meter shown in Figures 1 and 2,
Figure 4 is a first embodiment of a fitting for a heat consumption meter seen from the front,
Figure 5 is an end view of the embodiment shown in Figure 4,
Figure 6 is a front view of an alternative embodiment of a fitting,
Figure 7 is an end view of the embodiment shown in Figure 6 seen from the end,
Figure 8 is a diagram for illustrating the calculation of the heat consumption in various temperature conditions, and
Figure 9 is a flow chart for the meter's calculation of the heat consumption.

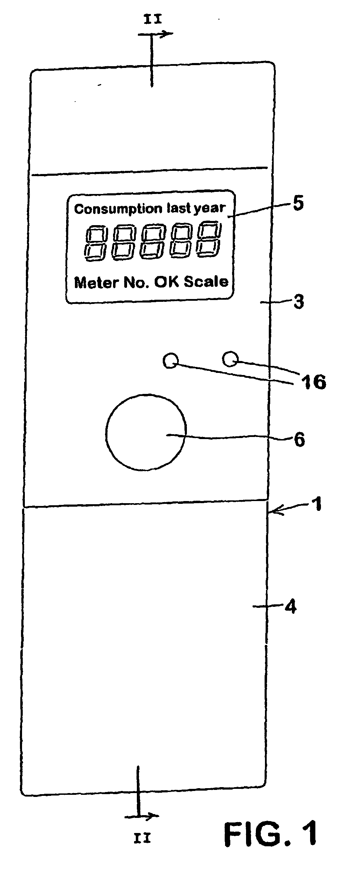

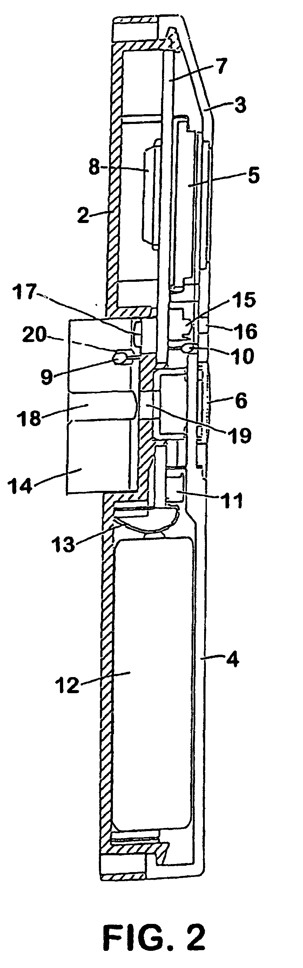

The electrical heat consumption meter shown in Figures 1 and 2 has a housing 1 of a thermoand electrically insulating material, preferably plastics, consisting of a bottom portion 2 and an upper and a lower cover 3 and 4, respectively. Through a window in the uppermost cover 3 an LCD display 5 can be seen as will appear from Figure 1. The uppermost cover 3 is secured to the meter by means of a lead seal 6 which is to be destroyed in order to allow access to the housing 1 interior. The uppermost lid secures the lowermost lid 4 in a manner not specifically illustrated which means that it cannot be removed either without breaking the lead seal 6.

Said display 5 is mounted on a bilaterally circuit board 7 secured in the housing. On the side opposite the display a calculator unit is mounted in the form of a microprocessor 8, and the same side of the board 7 also carries a radiator temperature sensor 9 and three rear element indication switches 17, only one of which being visible in Figure 2. On the front of the circuit board 7 a room temperature sensor 10 is also provided, a multiple plug 11 which allows for power supply from an external power source and for RF-communication with programming and data input and output readers via wire connections. Input and output reading may moreover be carried out over an optical infrared communication interface 15 with diodes 15A through windows 16 in the uppermost cover 3. As a third not shown option the data input and output reading may be effected via a radio transmitter/receiver which is in that case arranged in the housing 1 and connected to the electrical circuit via the multiple plug 11.

In Figure 2, below the lowermost cover 4 a battery package 12 is shown for supplying power to the meter via battery clamps 13.

The heat consumption meter described in the aforegoing is intended for mounting on a radiator over a fitting 14 shown in Figure 12 which is preferably mounted on a not shown mounting pin secured to the radiator and extending through an opening 18 in the fitting and also through an opening 19 in the bottom portion 2 of the meter. In Figure 2 the fitting 14 is also shown to have an indentation 20 in which the heat consumption meter 9 for a radiator is arranged when the meter is mounted on the fitting. The sensor 9 is, like the room sensor 35, preferably NTC-resistances, the resistance values of which are a measure of the temperatures that they are to read and the temperature of the fitting 14 and the temperature of the room, respectively. The values determined by the temperature sensors are not the correct ones but they are calculated by the electrical circuits 7,8 on the basis of constants determined in advance in climate rooms for the individual radiator and fitting types.

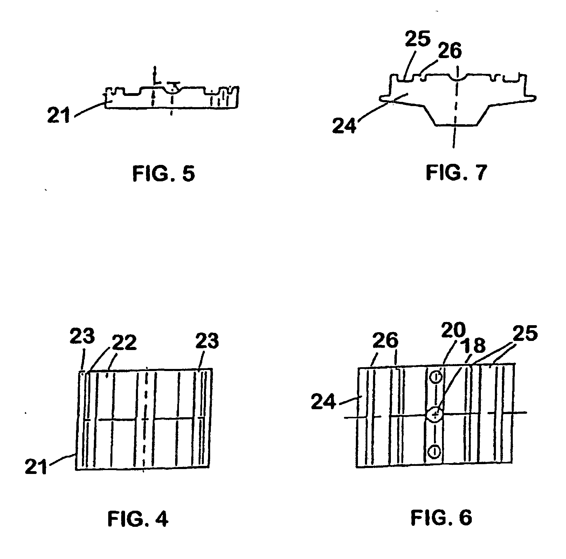

Since large numbers of radiator types are available with many different designs it is necessary to use many different types of fittings to obtain good and unambiguous transmission of heat from the radiator to the meter, which types of fittings are adapted to the relevant radiator constructions. Two different fitting designs are shown in Figures 4-7. The fitting 21 shown in Figures 4 and 5 is intended for attachment on a plane radiator surface with its planar side while the opposite side is profiled with a number of grooves 22 and guides 23. Depending on the location of the grooves, the fitting indicator switches 17 will be actuated by guides 23 when the meter is mounted in the fitting. By using three switches 17 different widths and locations of the grooves 22 may actuate one, two or three of the switches 17 which means that a total of seven combinations for actuation is possible, the eighth combination, in which neither of the switches is actuated, indicating that the meter is not mounted on a fitting. The various combination types are designated e.g. A,B,C ..., and the combination of actuated switches 17 will indicate the type of fitting which is caused to be displayed on the display 5 by means of the electrical circuit. Thus an unequivocal reading and display of the fitting type is thus produced whereby it may readily be verified that the correct fitting A,B,C ... has been used in connection with the relevant radiator.

Figures 6 and 7 illustrate a second fitting 24 for mounting on another radiator type, and here the grooves 25 and the guides 26 have another width and location than on the fitting 21 in Figures 4 and 5. In the fitting 24, in addition to the mounting opening 18, the indentation 20 for receiving the heat consumption sensor 9 is shown. 30 the fitting is made of a good heat-conductor, preferably aluminium, and they have a comparatively short length which advantageously constitutes one third of the length of the house in order to avoid that too much heat is transmitted to a mounted meter whereby it is ensured that the latter and thus also the room sensor 10 is not unduly heated. The fittings are advantageously symmetrical about a central axis thereby ensuring that they are not inverted during mounting.

If the number of switch actuation combinations is insufficient, more grooves and guides on the fittings and further switches 17 on the meter may be provided, or switches 17 may be used which have several switch positions in connection with guides and grooves of differing depths.

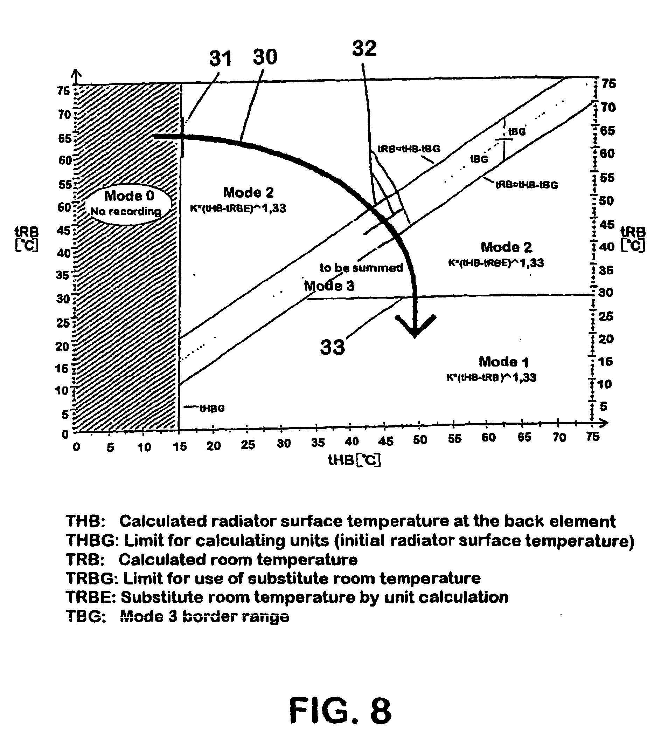

Reference is now made to Figure 8 that diagrammatically illustrates various temperature conditions that determine the way in which the recording of heat consumption is to be calculated and recorded. In the diagram the horizontal axis indicates the radiator temperature THB calculated by the electrical circuit determined on the basis of the value measured by the radiator temperature sensor 9. In a corresponding manner the vertical axis designates the room temperature TRB calculated by the circuit on the basis of the value measured by the room temperature sensor 10. In the diagram, the various temperature modes are designated mode 0, mode 1, mode 2, and mode 3. In mode 0 that covers the temperature range in which the calculated radiator temperature is below a marginal value ^{THBG}, no recording is made of heat consumption since it is here assumed that no heat is emitted from the radiator. This radiator surface starting temperature ^{THBG} may e.g. be set to 15°C. In this operation mode, there is only a poor possibility of falsifying the measurement result, e.g. by cooling of the radiator around the fitting or by intensive heating of the meter from its front whereby the room sensor measures a temperature which is too elevated. Should this occur over a protracted period during the heating season, the calculator unit of the meter is arranged for using a set temperature TRBE, the so-called substitute room temperature, which may e.g. be set to be 20°C, instead of the calculated room temperature TRB. However, such intensive heating of the meter through some time will also cause the radiator temperature sensor to be heated whereby the calculating unit will pass from mode 0 to one of the other modes by transgression of said border value THBG.

In the normal operation mode during the heating season the calculated radiator and room temperatures are comprised within the range defined in the diagram as mode 1, and the energy consumption is calculated in accordance with the formula E = K* (THB - TRB)^{1,33}, wherein K is a pre-set characteristic value for the relevant radiator type and size, and wherein the potency 1,33 is a commonly known normal value which may, in particular cases, have a slightly different value. The mode-1 range has an upper limit as regards the calculated room temperature of a border value TRBG above which the calculated room temperature TRB is not used in the heat consumption, but the above-defined substitute room temperature TRBE. Like in mode 0, the mode-1 state, provides only a poor possibility of falsifying the measurement result. Thus, although the room temperature sensor could be heated a few degrees whereby the calculated room temperature TRB becomes too low, the result would very easily be that the temperature conditions leave mode 1 to transgress the said limit TRBG and enter mode 2. The other, but very unlikely risk of cheating would be to cool the radiator temperature sensor.

In the mode-2 area which is, in the diagram, above the mode-1 area, the heat consumption is calculated in accordance with the formula E = K* (THB - TRBE)^{1,33} which corresponds to the expression defined above, the only difference being that instead of the calculated room temperature TRB the said substitute room temperature TRBE is used. The mode-2 state is characterised in that the radiator is turned on while a very high calculated room temperature TRB is recorded. This may be due to e.g. the radiator being covered or incident sun, or there may be particular reasons for a high room temperature. Covering of the radiator and incident sun will cause the measured room temperature to be too high, and the measured radiator temperature will also be too high. The calculated heat consumption will be too low if the formula for mode 1 is used for the calculation. It is not possible to distinguish between covering and incident sun since the temperature curves for these two situations are very much alike, but incident sun will often occur at small intervals and only in case of meters which have been mounted opposite a window. Incident sun may also mean that the thermostatic valve of the radiator turns off the water flow. When the substitute room temperature is used for calculating the heat consumption, possible inconvenient side effects from undesired manipulation are avoided.

In the inclined area in the diagram in Figure 8 designated mode 3, the dotted centre line indicates the mode in which the calculated room temperature is identical with the calculated radiator temperature. The mode-3 area is delimited by lines that are parallel with said centre line and which are situated at a distance TBG therefrom, wherein TBG may be e.g. 5° above and below the centre line, i.e. the calculated room temperature may vary 5° to either side of the radiator temperature.

It is a precondition for mode 3 that the radiator is turned off or at least that no heat is supplied to or removed from the radiator through the conduits leading thereto. In this context, the precondition for the calculator unit entering mode 3 is that the calculated room temperature increases above the calculated radiator temperature. The heat consumption will also in mode the 3 be calculated in accordance with the formula given for mode 1, but here the consumption is calculated with signs and summed in a separate mode-3 register. If the room temperature is thus higher than the radiator temperature the heat received by the radiator from the surroundings is calculated as a negative heat consumption.

When the room temperature subsequently drops below the radiator temperature thereby causing the radiator to emit heat to the surroundings, a positive heat consumption is calculated. When the meter leaves mode 3 the contents of the separate mode-3 register is added to the total consumption and the register is re-set to zero. The mode-3 state may e.g. occur during a hot period of the year where the room temperature at daytime may exceed the radiator temperature but drops there below at night. Thus, the mode-3 state prevents that the positive "heat consumption" during the night is recorded as an actual consumption, but in that event compensation is made therefor by a negative heat consumption during the day. The consumption in the mode-3 register which is very often zero is added to the total consumption once during 24 hours, optionally following multiples of 24 hours, in order to avoid a sudden large leap in the counts. It should be noted that it is important that a cycle of 24 hours or a multiple of 24 hours is used, whereby it is periodically estimated whether there is constantly a negative counting which could be indicative of cheating. This could be obtained with very good insulation of the meter, but in practice this would probably be associated with much trouble. The temperature state which is above the mode-3 area is designated mode 2 in the diagram like the area below the mode-3 area. The heat consumption is calculated in accordance with the same formula as mentioned above in connection with the other mode-3 area, and it is characteristic of this upper mode-2 area that the calculated room temperature is considerably above the calculated radiator temperature.

In practice, this state would hardly occur unless as a consequence of unintentional manipulation, such as intensive heating of the meter from its front. Thus, in the calculation of the heat consumption said substitute room temperature is used to prevent undue recording of a negative consumption. If a negative consumption is continuously measured in mode 3, switching is made to mode 2.

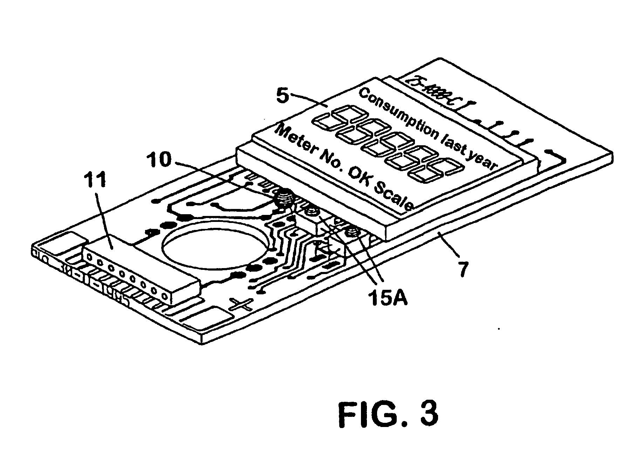

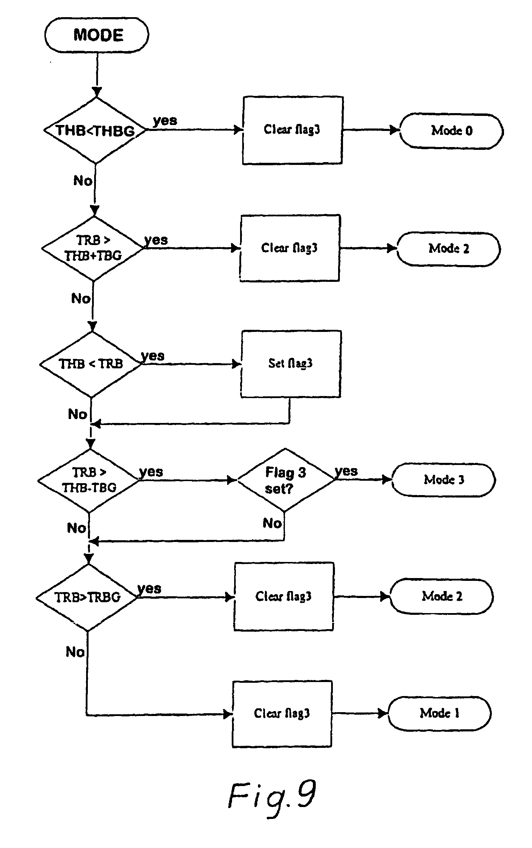

The flow chart included in Figure 9 shows the heat meter's determination of the actual mode by calculation of the heat consumption in correspondence with the calculation procedure described above in connection with Figure 8. The arrow 30 shown in connection with Figure 8 indicates the sequence of the decisions in the flow chart, and the short bold lines 31,32 and 33 indicate the area limits at which questions are put in the flow chart of Figure 9. The meter may only enter mode 3 when the room temperature exceeds the radiator temperature (TRB>THB). For this purpose flag 3, cf. Figure 3, is used which is applied when this condition has been complied with. If the meter enters other modes, the flag 3 is set back.

From the explanation given above in connection with Figure 8, it will appear that in case of naturally occurring temperature fluctuations, in particular when the weather is hot, an approximately correct recording of the heat consumption is obtained, since it is possible with the meter to compensate for a positive, not actual consumption by a corresponding negative consumption. In abnormal operating conditions that usually occur due to the manipulation in order to cheat the meter, measures have been taken to counter falsified recordings whereby, from an overall point of view, a meter is provided which would in all operating conditions yield a satisfactory, approximately correct recording of the heat consumption.

On the display 5 in the meter the recorded heat consumption units and the consumption the previous year may advantageously be shown in an information cycle, as well as an installation number and a scale size indicating the weighing factor used for the relevant radiator in the calculation of the heat consumption units.

The measured and calculated values of room temperature and radiator temperature as well as the fitting denominations A,B,C will usually not be shown in said information cycle, but may be brought on display by the operators when reading the meter during replacement of battery and the like.

Thus, this preferred embodiment of the invention provides an electric heat consumption meter for a radiator for recording heat consumed from a radiator comprising a housing with a bottom portion and a cover with a calculator unit and temperature sensors connected therewith for radiator and room temperatures, and a power supply, wherein the calculator unit is arranged for calculating the heat emission from the radiator on the basis of the pre-set temperatures and an overall weighing factor, scale size, and wherein the room temperature sensor is arranged below the cover.

In this preferred embodiment for an electric heat consumption meter for a radiator, the bottom portion and cover of the housing are made of a non-conductive material, and the radiator temperature sensor is arranged exteriorly of the bottom portion of the housing and mounted in good heat-contact with a well conducting fitting which is adapted to and secured onto the radiator, and which has, on its meter mounting surface, a number of protrusions and/or indentations, the design and locations of which are characteristic of the relevant fitting, and wherein the meter has a number of switches that face towards the fitting and which may be actuated in correspondence with the protrusions/indentations of the fitting for reading the type of fitting with a well-conducting fitting adapted for and secured onto the radiator, and which has on its meter mounting surface a number of protrusions and/or indentations, the designs and locations of which are characteristic of the relevant fitting, and wherein the meter has a number of switches facing towards the fitting that may be actuated in correspondence with the protrusions/indentations of the fitting for sensing the type of fitting.

Thus, by making the cover of the housing as well as its bottom portion of a non-conductive material, good shielding of the room temperature is provided which means that it is not unduly influenced by the radiator, and this arrangement known per se of the room temperature sensor in the meter housing it is simultaneously substantially prevented that manipulation of the meter, such as covering thereof, heating of the room temperature sensor or cooling of the radiator temperature sensor, will change the difference between the radiator and room temperatures and thus the recording of the consumption. It should be noted that the sensors, and in particular the room temperature sensor, will not in normal conditions bring about the correct radiator and room temperatures which are, however, calculated by the calculator unit on the basis of predetermined characteristic values for the radiator and the meter. Owing to its configuration, the well conducting fitting thus has an unambiguous and good contact with the radiator whereby the calculated radiator temperature will always be right. The protrusions/indentations provided in the fitting in connection with contact means on the back of the meter, which are selectively actuated by the fitting, serve to ensure that in connection with the relevant radiator that the correct fitting therefor is used which may, via said switches, be used for display on a display. This it is ensured to a high degree that the temperature measurement and thus the heat consumption recording are correct.

In one embodiment of the radiator meter according to the invention the conductive fitting is a separate element which is independent of the housing and whose length constitutes a maximum of one third of the length of the housing. Hereby the shielding of the room temperature sensor is further enhanced whereby this measurement is only to a very small degree influenced by direct heating from the radiator.

Said protrusions or indentations may have any of a number of shapes such as bosses and bores or may be throughgoing grooves with interjacent material guides in the meter mounting surface of the fitting. Since many different types and configurations of radiators are available, there is a need for several different fittings in order to obtain good, unambiguous transmission of heat via the fitting. For sensing the relevant type of fitting the protrusions/indentations of the fitting are, in accordance with an advantageous embodiment according to the invention, constituted of at least two grooves at each side which are symmetrically arranged, and the meter has at least three switches which each has at least two switching functions. By means of these switches a number of combinations are available, depending on their actuation, for indicating the type of fitting, and in case further combinations are required, each switch may in that case have a further switching function. The symmetrical arrangement of the grooves in the fitting prevents, of course, it from being inverted. The material guides situated between the grooves and with which the back of the meter is in contact transmit the radiator heat directly to the meter housing and by suitable dimensioning of these material lists the heat supply to the meter may be balanced to prevent undue heat transmission in particular to the room temperature sensor from occurring.

As stated above, the calculator unit comprises a microprocessor that calculates the actual values for radiator temperatures and room temperatures on the basis of the supplied measurement values for radiator temperature and room temperature by means of pre-determined characteristic figures of the relevant radiator in accordance with the invention. This is convenient since a more versatile heat consumption meter for a radiator is hereby obtained which may also be used in installations in combination with other meter types.

The microprocessor according to the invention may advantageously be connected to an optical sectional plane and a multiple plug for input and output of data for programming, etc. With an optical programming and input and output units or via a wiring to the multiple plug, the information contained in the microprocessor may hereby readily be modified or read. Moreover, conveniently the meter also has an LDC-display in connection with the micoprocessor which allows that information may always be read, even in case of a low current consumption.

It is a further option that the input and output of data, etc., may always be effected via a radio transmitter/receiver integral with the meter and connected to the microprocessor. When the meter is provided with such radio transmitter/receiver it will be "inspected" only at infrequent intervals of e.g. 8-10 years and therefore the switches have the further essential function of causing the radio transmitter to immediately transmit a message in case the meter is dismounted from the radiator or in case manipulation thereof is carried out in any other way.

## Claims

1. A method of recording heat consumed in a radiator located in a room where associated values of the respective temperatures of the radiator (THB) and the room (TRB) are measured or calculated, and wherein the measured or calculated values for room temperature (TRB) and radiator temperature (THB) are used to calculate the heat emission from the radiator to the room, said calculation being carried out on the basis of a predetermined mode of calculation (mode 0, 1, 2, 3), and wherein the calculated values for the heat emission are continuously summed to a recording value, and wherein the sum thus obtained is used as a new recording value, **characterized in that** in given preconditions a calculation mode (mode 3) is used wherein predetermined room temperature ranges (TRB) that exceed the radiator temperature (THB) mean that negative values for the radiator's heat emission to the room are calculated, and predetermined room temperature ranges (TRB) which are lower than the radiator temperature (THB) mean that positive values for the radiator's heat emission to the room are calculated, and the thus calculated values for the negative heat emission as well as the positive emission are recorded at least over a period, and that on the basis of these values a value is obtained and recorded for the total heat emission that corresponds to the sum of the calculated values for heat emission, and that this value is added to the recording value.

2. A method according to claim 1, **characterized in that** said period corresponds to 24 hours.

3. A method according to claim 1 or 2, **characterized in that** only positive values for the total heat emission is added to the recording value.

4. A method according to claim 1-3, **characterized in that** upon selection the above-mentioned calculation mode (mode (3) is maintained for as long as the numeric difference between values for the room temperature (TRB) and the radiator temperature (THB) is less than a predetermined value (TBG).

5. A method according to claim 4, **characterized in that** in temperature ranges where the numeric difference between values for the room temperature (TRB) and the radiator temperature (THB) exceeds a. predetermined marginal value (TBG), a calculation mode (mode 1,2) is selected in which a calculation of the heat emission is carried out successively for each measurement or calculation for associated values for the room temperature (TRB) and the radiator temperature (THB), following which only positive values for the heat emission are continuously added to the recording value.

6. A method according to claim 5, **characterized in that** in case of room temperatures (TRB) that exceed a predetermined border value, a calculation mode (mode 2) is selected in which a predetermined substitute room temperature (TRBE) is used instead of the measured or calculated room temperature.

7. A method according to any one of the preceding claims, **characterized in that** in case of radiator temperatures (THB) that are lower than a predetermined value (THBG), a mode (mode 0) is selected in which no calculations of the heat emission are carried out.

8. An electric heat consumption meter for a radiator for exercising the method according to any one of the preceding claims and comprising a housing (1, 2, 3, 4) with a calculator unit (8) and with associated temperature sensors (9 and 10) for radiator and room temperatures, wherein the calculator unit (8) comprises a register for storing a recording value for the total amount of heat consumed, and is arranged for calculating the heat emission from the radiator on the basis of said predetermined values, and to add this to the recording value, and to store this recording value as a new recording value, **characterized in that** the calculator unit (8) of the meter is arranged for operating in a mode (mode 3) in which the calculator unit (8), when the calculated room temperature (TRB) exceeds the calculated radiator temperature (THB), carries out a calculation of negative heat emission, and sums this with any positive heat emission within one or more periods corresponding to 24 hours prior to recording any positive sum.

9. An electric heat consumption meter for a radiator according to claim 8, **characterized in that** the calculator is arranged such as to carry out the calculation within at least one period corresponding to 24 hours.

10. A electric heat consumption meter for a radiator according to claims 8 or 9, **characterized in** being arranged for switching to an alternative operating mode (mode 1, 2) when the numerical difference between values for the room temperature (TRB) and the radiator temperature (THB) is less than a predetermined value (TBG), and wherein only the positive calculated values for the heat emission are continuously added to the recording value.

## Patentansprüche

1. Verfahren zum Aufzeichnen einer von einem in einem Raum befindlichen Radiator verbrauchten Wärmemenge, bei dem zugeordnete Werte der jeweiligen Temperaturen des Radiators (THB) und des Raumes (TRB) gemessen oder berechnet werden, und bei dem die gemessenen oder berechneten Werte für Raumtemperatur (TRB) und Radiatortemperatur (THB) verwendet werden, um die Wärmeemission von dem Radiator in den Raum zu berechnen, wobei die Berechnung auf der Grundlage eines vorbestimmten Berechnungsmodusses (Modus 0, 1, 2, 3) ausgeführt wird, und bei dem die berechneten Werte für die Wärmeemission kontinuierlich zu einem Aufzeichnungswert addiert werden, und bei dem die so erlangte Summe als ein neuer Aufzeichnungswert verwendet wird, **dadurch gekennzeichnet, dass** bei vorgegebenen Vorbedingungen ein Berechungsmodus (Modus 3) verwendet wird, bei dem vorbestimmte Raumtemperaturbereiche (TRB), welche die Radiatortemperatur (THB) übersteigen, bedeuten, dass negative Werte für die Wärmeemission des Radiators an den Raum berechnet werden, und vorbestimmte Raumtemperaturbereiche (TRB), welche niedriger als die Radiatortemperatur (THB) sind, bedeuten, dass positive Werte für die Wärmeemission des Radiators an den Raum berechnet werden, und die somit berechneten Werte für die negative Wärmeemission sowie die positive Emission zumindest über einen Zeitabschnitt aufgezeichnet werden, und dass auf der Grundlage dieser Werte ein Wert für die Gesamtwärmeemission erlangt und aufgezeichnet wird, welcher der Summe der berechneten Werte für Wärmeemission entspricht, und dass dieser Wert zu dem Aufzeichnungswert hinzu addiert wird.

2. Verfahren nach Anspruch 1, **dadurch gekennzeichnet, dass** der Zeitabschnitt 24 Stunden entspricht.

3. Verfahren nach Anspruch 1 oder 2, **dadurch gekennzeichnet, dass** nur positive Werte für die Gesamtewärmeemission zu dem Aufzeichnungswert hinzu addiert werden.

4. Verfahren nach Anspruch 1 bis 3, **dadurch gekennzeichnet, dass** bei Auswahl der vorstehend erwähnte Berechnungsmoduss (Modus 3) so lange beibehalten wird, als die numerische Differenz zwischen Werten für die Raumtemperatur (TRB) und der Radiatortemperatur (THB) geringer als ein vorbestimmter Wert (TBG) ist.

5. Verfahren nach Anspruch 4, **dadurch gekennzeichnet, dass** bei Temperaturbereichen, bei denen die numerische Differenz zwischen Werten für die Raumtemperatur (TRB) und der Radiatortemperatur (THB) einen vorbestimmten Randwert (TBG) übersteigt, ein Berechnungsmodus (Modus 1, 2) ausgewählt wird, bei dem eine Berechnung der Wärmeemission nacheinander für jede Messung oder Berechnung für zugeordnete Werte für die Raumtemperatur (TRB) und die Radiatortemperatur (THB) ausgeführt wird, wonach nur positive Werte für die Wärmeemission kontinuierlich zu dem Aufzeichnungswert hinzu addiert werden.

6. Verfahren nach Anspruch 5, **dadurch gekennzeichnet, dass** in dem Fall von Raumtemperaturen (TRB), die einen vorbestimmten Grenzwert übersteigen, ein Berechnungsmodus (Modus 2) ausgewählt wird, bei dem eine vorbestimmte Ersatzraumtemperatur (TRBE) anstatt der gemessenen oder berechneten Raumtemperatur verwendet wird.

7. Verfahren nach einem der vorausgehenden Ansprüche, **dadurch gekennzeichnet, dass** in dem Fall von Radiatortemperaturen (THB), die niedriger sind als ein vorbestimmter Wert (THBG), ein Modus (Modus 0) ausgewählt wird, bei welchem keine Berechnungen der Wärmeemission durchgeführt werden.

8. Elektrischer Wärmeverbrauchszähler für einen Radiator zum Ausführen des Verfahrens nach einem der vorstehenden Ansprüche, welcher ein Gehäuse (1, 2, 3, 4) mit einer Berechnungseinheit (8) und mit zugeordneten Temperatursensoren (9 und 10) für Radiator- und Raumtemperaturen aufweist, bei dem die Berechnungseinheit (8) ein Register zum Speichern eines Aufzeichnungswertes für die gesamte Menge der verbrauchten Wärme aufweist und eingerichtet ist, um die Wärmeemission aus dem Radiator auf der Grundlage der vorbestimmten Werte zu berechnen, und um diese zu dem Aufzeichnungswert hinzu zu addieren, und um diesen Aufzeichnungswert als neuen Aufzeichnungswert zu speichern, **dadurch gekennzeichnet, dass** die Berechnungseinheit (8) des Zählers zum Betrieb in einem Modus (Modus 3) eingerichtet ist, in dem die Berechnungseinheit (8) dann, wenn die berechnete Raumtemperatur (TRB) die berechnete Radiatortemperatur (THB) übersteigt, eine Berechnung einer negativen Wärmeemission ausführt und diese zu jeglicher positiver Wärmeemission innerhalb einer oder mehrerer Zeitabschnitte, die 24 Stunden entsprechen, summiert bevor jegliche positive Summe aufgezeichnet wird.

9. Elektrischer Wärmeverbrauchszähler für einen Radiator nach Anspruch 8, **dadurch gekennzeichnet, dass** die Berechnungseinheit so eingerichtet ist, dass sie die Berechnung innerhalb zumindest eines 24 Stunden entsprechenden Zeitabschnitts ausführt.

10. Elektrischer Wärmeverbrauchszähler für einen Radiator nach den Ansprüchen 8 oder 9, **dadurch gekennzeichnet, dass** er zum Wechseln in einen alternativen Betriebsmodus (Modus 1, 2), wenn die numerische Differenz zwischen Werten für die Raumtemperatur (TRB) und die Radiatortemperatur (THB) geringer ist als ein vorbestimmter Wert (TBG), eingerichtet ist und bei dem nur die positiven berechneten Werte für die Wärmeemission kontinuierlich zum Aufzeichnungswert hinzuaddiert werden.

## Revendications

1. Procédé d'enregistrement de la chaleur consommée par un radiateur situé dans une pièce selon lequel des valeurs associées des températures respectives du radiateur (THB) et de la pièce (TRB) sont mesurées ou calculées, et selon lequel les valeurs mesurées ou calculées pour la température ambiante (TRB) et la température du radiateur (THB) sont calculées pour évaluer l'émission thermique du radiateur vers la pièce, ledit calcul étant effectué sur la base d'un mode prédéterminé de calcul (mode 0, 1, 2, 3), et selon lequel les valeurs calculées pour l'émission thermique sont ajoutées en continu à une valeur d'enregistrement, et selon lequel la somme ainsi obtenue est utilisée comme nouvelle valeur d'enregistrement, **caractérisé en ce que**, dans des conditions données préliminaires, on utilise un mode de calcul (mode 3) dans lequel des intervalles prédéterminés de températures ambiantes (TRB) dépassant la température du radiateur (THB) signifient que des valeurs négatives pour l'émission thermique du radiateur vers la pièce sont calculées, et des intervalles prédéterminés de températures ambiantes (TRB) qui sont inférieures à la température du radiateur (THB) signifient que des valeurs positives pour l'émission thermique du radiateur vers la pièce sont calculées, et les valeurs ainsi calculées pour l'émission thermique négative ainsi que pour l'émission positive sont enregistrées sur au moins une période, et **en ce que**, sur la base de ces valeurs, on obtient et on enregistre une valeur pour l'émission thermique totale correspondant à la somme des valeurs calculées pour l'émission thermique, et **en ce que** cette valeur est ajoutée à la valeur d'enregistrement.

2. Procédé selon la revendication 1, **caractérisé en ce que** ladite période correspond à 24 heures.

3. Procédé selon la revendication 1 ou 2, **caractérisé en ce que** seule des valeurs positives pour l'émission thermique totale sont ajoutées à la valeur d'enregistrement.

4. Procédé selon la revendication 3, **caractérisé en ce que**, lors de la sélection, le mode de calcul mentionné ci-dessus (mode 3) est maintenu tant que la différence numérique entre des valeurs pour la température ambiante (TRB) et la température du radiateur (THB) est inférieure à une valeur prédéterminée (TBG).

5. Procédé selon la revendication 4, **caractérisé en ce que**, dans des intervalles de températures où la différence numérique entre des valeurs pour la température ambiante (TRB) et la température de radiateur (THB) dépasse une valeur limite prédéterminée (TBG), un mode de calcul (mode 1, 2) est sélectionné selon lequel un calcul de l'émission thermique est effectué, de façon successive, pour chaque mesure ou calcul des valeurs associées pour la température ambiante (TRB) et la température de radiateur (THB) à la suite de quoi seules des valeurs positives pour l'émission de chaleur sont ajoutées en continu à la valeur d'enregistrement.

6. Procédé selon la revendication 5, **caractérisé en ce que**, dans le cas de températures ambiantes (TRB) dépassant une valeur limite prédéterminée, on sélectionne un mode de calcul (mode 2) selon lequel une température ambiante prédéterminée de substitution (TRBE) est utilisée à la place de la température ambiante mesurée ou calculée.

7. Procédé selon l'une quelconque des revendications précédentes, **caractérisé en ce que**, dans le cas de températures de radiateur (THB) inférieures à une valeur prédéterminée (THBG), on sélectionne un mode (le mode 0) selon lequel aucun calcul d'émission de chaleur n'est effectué.

8. Dispositif électrique de mesure de consommation de chaleur pour un radiateur mettant en oeuvre le procédé selon l'une quelconque des revendications précédentes, et comprenant un boîtier (1, 2, 3, 4) muni d'une unité de calculateur (8) et de capteurs associés de température (9 et 10) pour des températures de radiateur et ambiante, dans lequel l'unité de calculateur (8) comprend un registre pour stocker une valeur d'enregistrement de la quantité totale de chaleur consommée et est prévue pour calculer l'émission de chaleur à partir du radiateur sur la base desdites valeurs prédéterminées et pour l'ajouter à la valeur d'enregistrement et pour stocker cette valeur d'enregistrement comme nouvelle valeur d'enregistrement, **caractérisé en ce que** l'unité de calculateur (8) du dispositif de mesure est prévue pour fonctionner dans un mode (mode 3) selon lequel l'unité de calculateur (8), lorsque la température ambiante calculée (TRB) dépasse la température calculée de radiateur (THB), effectue un calcul de l'émission de chaleur négative et l'ajoute à une quelconque émission de chaleur positive dans une ou plusieurs périodes correspondant à 24 heures avant d'enregistrer une quelconque somme positive.

9. Dispositif électrique de mesure de consommation de chaleur pour un radiateur mettant en oeuvre le procédé selon la revendication 8, **caractérisé en ce que** le calculateur est prévu pour effectuer le calcul pendant au moins une période correspondant à 24 heures.

10. Dispositif électrique de mesure de consommation de chaleur pour un radiateur mettant en oeuvre le procédé selon la revendication 8 ou 9, **caractérisé en ce qu'**il est prévu pour commuter dans un mode de fonctionnement en option (mode 1, 2) dans lequel la différence numérique entre des valeurs pour la température ambiante (TRB) et la température de radiateur (THB) est inférieure à une valeur prédéterminée (TBG) et dans lequel seules les valeurs positives calculées pour l'émission de chaleur sont ajoutées en continu à la valeur d'enregistrement.
